# EUROPEAN PATENT APPLICATION

(11) **EP 2 136 320 A1**
(43) Date of publication of application: **23.12.2009**
(21) Application number: 07737823.0
(22) Date of filing: 06.03.2007
(51) Int. Cl.: G06K 17/00, G06K 19/07, G06F 21/24, G06K 19/10

(54) **MOBILE TERMINAL, IC CARD MODULE, INFORMATION PROCESSING METHOD, AND PROGRAM**

(72) Inventor: The designation of the inventor has not yet been filed
(74) Representative: Betten & Resch
(86) International application number: PCT/JP2007/054248
(87) International publication number: WO 2007/105525

(57) **Abstract**

A mobile terminal device a use thereof by a third person is prevented is provided. The mobile terminal device includes: a terminal storage section 103 storing a unique identifier for uniquely specifying the mobile terminal; an interface section 106 for connecting to an IC card module; and a CPU 102 which checks whether a unique identifier is stored in a memory in the IC card module when the IC card module is connected to the interface section, and when a unique identifier is stored in the memory, checks matching of a unique identifier stored in the memory and a unique identifier stored in the terminal storage section, validates the IC card module when matched, invalidates the IC card module when not matched, and writes a unique identifier stored in the terminal storage section in the memory and validates the IC card module when a unique identifier is not stored in the memory.

## Description

### Technical Field

The present invention relates to an information processing method and a program for instructing a computer to execute the method for a use regulation of a mobile terminal, an IC card module, and an IC card.

### Background Art

Conventionally, as a mobile terminal having a function of a noncontact type IC card, a mobile terminal in which an IC card is preliminary built in is known (for example, in Japanese Laid Open Patent Application JP-P 2003-032176A). In this case, only a single type of IC card function can be used. For this reason, in order to use various types of IC cards, a mobile terminal in which the portion for installing an IC card function is detachable is disclosed.

### Disclosure of Invention

A mobile terminal in which the portion for installing the IC card function is detachable provides the foregoing merits for a user. However, there are following problems.

In a conventional mobile terminal in which a noncontact type IC card is detachable, the noncontact IC card is installed in the main body, and the application of the IC card is utilized. For example, prepaid electronic money is stored in the IC card. Then, this IC card is used as an authentication key, and by sing the communication function of the mobile terminal, electronic contents are purchased and downloaded through the Internet. In this case, the main-body of the mobile terminal is used as an apparatus available for IC card or an communication medium with the Internet. In this use method, even if the IC card is installed in another mobile terminal, the IC card function can be utilized. Thus, when the IC card is lost or the IC card is stolen, there is a possibility that the IC card is freely used in other's mobile terminal. When the prepaid electronic money is stored in the IC card, there is a fear that the electronic money is used by another person.

The present invention is proposed to solve the problems of a conventional technique as mentioned above. It is therefore an object of the present invention to provide a mobile terminal apparatus, an IC card module, an information processing method and a program for instructing a computer to execute the method for preventing another person from using the IC card.

In order to attain the object, the mobile terminal of the present invention includes: a terminal storage section configured to store a unique identifier for uniquely specifying a mobile terminal; an interface section configured to connect to an IC card module; and a CPU configured to check whether or net a unique identifier is stored in a memory in the IC card module when the IC card module is connected to the interface section, and when a unique identifier is stored in the memory, check matching of a unique identifier stored in the memory and a unique identifier stored in the terminal storage section, validate the IC card module when a result of the matching is matched, invalidate the IC card module when a result of the matching is not matched, and write a unique identifier stored in the terminal storage section in the memory and validate the IC card module when a unique identifier is not stored in the memory.

Also, in order to attain the object, the IC card module of the present invention includes: an interface unit configured to connect to the mobile terminal; a memory configured to store a unique identifier for uniquely specifying the mobile terminal; and a card control section configured to check whether or not information is stored in the memory when the mobile terminal is connected to the interface unit and a unique identifier is received from the mobile terminal, and check matching of the information and a received unique identifier when the information is stored in the memory, and permit a reception of an instruction signal from the mobile terminal requesting a use of the IC card module when a result of the matching is matched, reject the reception of the instruction signal from the mobile terminal when the result of the matching is not matched, and write a received unique identifier in the memory when the information is not stored in the memory and permit the reception of the instruction signal from the mobile terminal.

In the present invention, if the unique identifier of the mobile terminal connected to the IC card module is not matched with the unique identifier registered in the IC card module, the function of the IC card cannot be used. Also, when the IC card module is firstly used, the unique identifier of the mobile terminal is registered in the IC card module.

Also, in order to attain the object, the information processing method of the present invention includes: checking whether or not a unique identifier is stored in a memory of an IC card module when the IC card module is connected to an information processing device; checking matching of a unique identifier stored in the memory and a unique identifier stored in the information processing device when a unique identifier is stored in the memory, permitting a use of the IC card module by the information processing device when a result of the matching is marched, and refusing a use of the IC card module by the information processing device when a result of the matching is not hatched; and writing a unique identifier stored in the storage unit in the memory and permit a use of the IC card module by the information processing device when a unique identifier is not stored in the memory.

Moreover, in order to attain the object, the program of the present invention instructs the computer to execute: checking whether or not a unique identifier is stored in a memory of an IC card module when the IC card module is connected to an information processing device; checking matching of a unique identifier stored in the memory and a unique identifier stored in the information processing device when a unique identifier is stored in the memory, permitting a use of the IC card module by the information processing device when a result of the matching is matched, and refuse a use of the IC card module by the information processing device when a result of the matching is not matched; and writing a unique identifier stored in the storage unit in the memory when a unique identifier is not stored in the memory and permitting a use of the IC card module by the information processing device.

According to the present invention, in a mobile terminal in which a plural kinds of IC cards can be selectively used, the functions of the plural kinds of the IC cards can be designed to be operated only in the particular mobile terminal. Thus, it is possible to prevent the user's own mobile terminal from being freely used by another person.

### Brier Description of Drawings

Fig. 1 is a view showing a mobile terminal in an exemplary embodiment;
Fig. 2 its a block diagram showing a configuration example of a mobile terminal in an exemplary embodiment;
Fig. 3 is a block diagram showing a configuration example of an IC card module; and
Fig. 4 is a flowchart showing an operational procedure of a mobile terminal in an exemplary embodiment.

### Best Mode for Carrying Out the Invention

In a mobile terminal in this exemplary embodiment, an IC card is detachable. An identifier of a mobile terminal is registered in the IC card so that the IC card can be operated only in the particular mobile terminal.

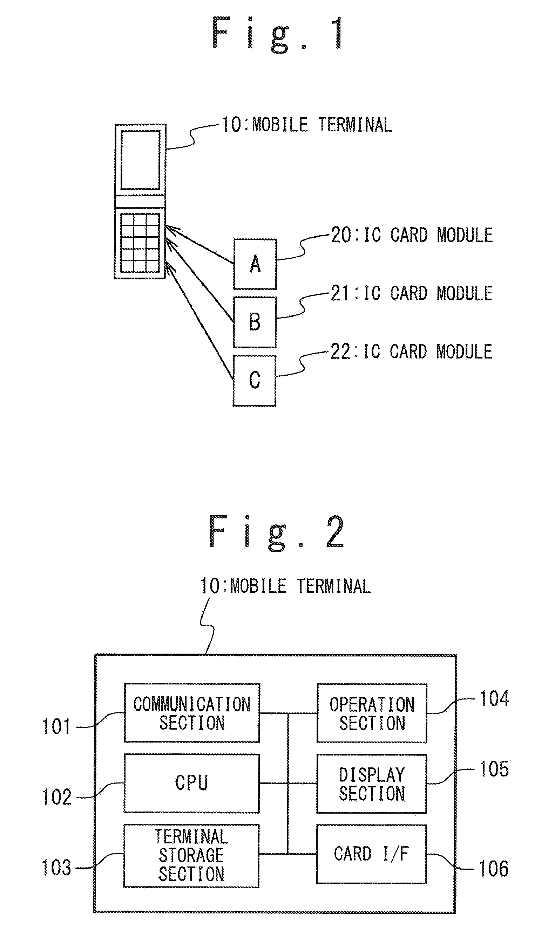

The configuration of a mobile terminal in this exemplary embodiment will be described below with reference to the drawings. Fig. 1, is a view showing the mobile terminal in this exemplary embodiment. A mobile terminal 10 in this exemplary embodiment has an interface on which a plural kinds of IC card modules 20, 21, 22 having different system with each other can be installed. The types of the IC card modules 20, 21, 22 are arbitrarily selected by a user, for example, from any of conventional [Type A], [Type B] and [Type C]. The IC card modules 20, 21 and 22 are the noncontact type IC cards. The configurations of the mobile terminal and the IC card module will be described below.

Fig. 2 is a block diagram showing a configuration example of the mobile terminal in this exemplary embodiment. As shown in Fig. 2, the mobile terminal 10 has: a communication section 101 for connecting to a network such as the Internet (not shown); a CPU (Central Processing Unit) 102 for executing predetermined processing in accordance with a program; a terminal storage section 103 for storing the program; an operation section 104 such as a keypad and the like; a display section 105 such as LCD (Liquid Crystal Display) and the like, and a card interface (I/F) 106 for electrically connecting to an IC card module. The terminal storage section 103 stores information of a unique identifier (unique ID) for uniquely specifying the mobile terminal.

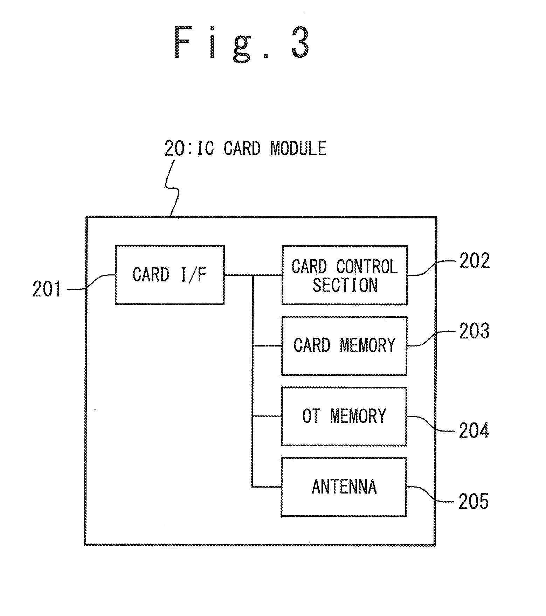

Fig. 3 is a block diagram showing a configuration example of an IC card module. The IC card modules 20, 21 and 22 are similar in configuration. The case of the IC card module 20 is representatively shown in Fig. 3. The IC card module 20 has: a card I/F 201 for electrically connected to the mobile terminal 10 through the card interface I/F 106 in the mobile terminal 10; a card control section 202 including CPU for executing functions as the IC card; a card memory 203 for storing electronic contents and the like; a one-time memory (hereafter, referred to as an OT memory) 204 on which a writing can be performed only one time; and an antenna 205 for carrying out a short range radio communication with the apparatus corresponding to the IC card in noncontact communication. Since the antenna 205 is installed in the IC card module 20, the function of the IC card can be used even in the mobile terminal that is not provided with the antenna for short distance radio communication.

The OT memory 204 stores information of the unique ID of the mobile terminal as terminal information. In this exemplary embodiment, the OT memory 204 is constitute by a semiconductor memory in which the writable number is limited to one time. The terminal information may be stored in an memory area of the card memory 203 with the writing limitation. However, for improving anti-fraudulent effect, the terminal information is desired to be stored in a discrete semiconductor memory. This is because, when the writing limitation is performed on a program, there is a fear that the program is rewritten.

Here, specific examples of the IC card and the apparatus corresponding thereto are described. If the IC card has a function for making settlement of product purchase electronically, the apparatus corresponding to the IC card is a cash register in a shop. If the IC card has a function for making settlement of paying the fare of a train, the apparatus corresponding to the IC card is a ticket gate in a station.

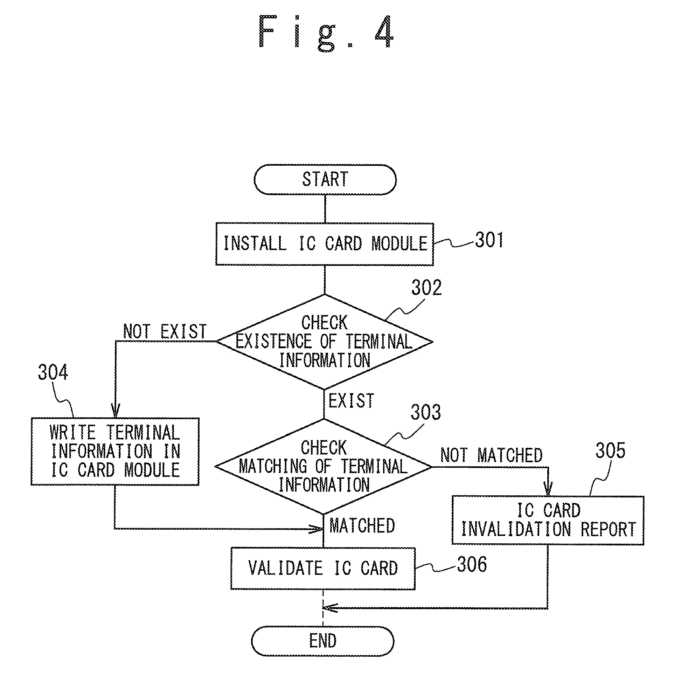

Operations of a mobile terminal in this exemplary embodiment will be described below. Fig. 4 is a flowchart showing operational procedure of a mobile terminal in this exemplary embodiment. The processing shown in this flowchart is executed by processing of the CPU 102 in accordance with the predetermined program stored in the terminal storage section 103 in the mobile terminal.

At first, the IC card module is installed in the mobile terminal 10 (Step S301). When the IC card module is installed, it is checked whether or not the terminal information is written in the OT memory 204 in the module (Step 302). Here, the terminal information is the unique ID of the mobile terminal 10 exemplified by a subscriber ID.

Subsequently, if the terminal information exists in the IC card module, the matching of the terminal information in the IC card module an the unique ID installed in the terminal itself are checked (Step 303). Also, if the terminal information does not exist in the 1C card module at the step S302, the unique ID is written to the OT memory 204 in the terminal information (Step 304), and the processing proceeds to the step 306.

If the terminal information stored in the IC card module and the unique ID of the mobile terminal 10 are matched at the step 303, the CPU 102 validates the IC card control section 202 (step 306). "Validating of IC Card control section 202" implies that the mobile terminal 10 is set to be able to use functions of the IC card module 20. After this process, the user can use the functions of the IC card on the mobile terminal 10, similarly to a conventional mobile terminal having a built-in IC card. On the other hand, if the terminal information and the unique ID are not matched, the IC card control section 202 is invalidated. Then, the result that the IC card cannot be used is displayed on the display section 105 (step 305).

In this exemplary embodiment, if the unique identifier of the mobile terminal connected to the IC card module is not matched with the unique identifier pre-registered in the IC card module, the user cannot use the functions of the IC card. Only by connecting the IC card module firstly used to the self mobile terminal, a user can register the unique identifier in the IC card module. After that, even if a mobile terminal of another person is connected, it is impossible to rewrite the unique identifier registered in the IC card module.

In the present invention, in a mobile terminal designed to be able to selectively use a plural kinds of IC cards, it is possible to set the functions of the plural kinds of the IC cards to be operated only in the particular mobile terminal. Thus, it is possible to prevent the IC card from being freely used by another person.

Further, the processing shown in Fig. 4 may be carried out by the card control section 202 in the IC card module, instead of the CPU 102 on the side of the mobile terminal 10). In addition to the above-mentioned effects, the checking process for the use regulation as mentioned above is carried out on the side of the IC card module. Thus, even if the checking process is not written in the program of the mobile terminal, the IC card is prevented from being used in another different mobile terminal. The operation in this case will be simply described below.

When the card I/F 201 is connected two the mobile terminal 10 and receives the unique ID from the mobile terminal 1.0, the card control section 202 checks whether or not the terminal information is stored in the OT memory 204. If the terminal information is stored in the OT memory 204, the card control section 202 checks whether or not the received unique ID and the terminal information are matched. Then, if they are matched, the card control section 2502 is set to be receivable of the instruction signal sent from the mobile terminal 10 for utilize the IC card functions. On the contrary, if the received unique ID) is different from the terminal information, the reception of the instruction signal from the mobile terminal 10 is rejected. The mobile terminal 10 displays the result that the IC card cannot be used on the display section 105. On the other hand, if the terminal information is not stored in the OT memory 204, the card control section 202 writes the received unique ID in the OT memory 204, and is set to be receivable of the instruction signal from the mobile terminal 10.

Also, the information processing method described by using Fig. 4 may be applied to the program for instructing a computer to execute.

## Claims

1. A mobile terminal comprising:
a terminal storage section configured to store a unique identifier for uniquely specifying a mobile terminal;
an interface section configured to connect to an IC card module; and
a CPU configured to check whether or not a unique identifier is stored in a memory in the IC card module when the IC card module is connected to the interface section, and when a unique identifier is stored in the memory, check matching of a unique identifier stored in the memory and a unique identifier stored in the terminal storage section, validate the IC card module when a result of the matching is matched, invalidate the IC card module when a result of the matching is not matched, and write a unique identifier stored in the terminal storage section in the memory and validate the IC card module when a unique identifier is not stored in the memory.

2. An IC card module designed to be communicatively connected to a mobile terminal, wherein the IC card module comprises:
an interface unit configured to connect to the mobile terminal;
a memory configured to store a unique identifier for uniquely specifying the mobile terminal; and
a card control section configured to check whether or not information is stored in the memory when the mobile terminal is connected to the interface unit and a unique identifier is received from the mobile terminal, and check matching of the information and a received unique identifier when the information is stored in the memory, and permit a reception of an instruction signal from the mobile terminal requesting a use of the IC card module when a result of the matching is matched, reject the reception of the instruction signal from the mobile terminal when the result of the matching is not matched, and write a received unique identifier in the memory when the information is not stored in the memory and permit the reception of the instruction signal from the mobile terminal.

3. The IC card module according to claim 2, wherein the memory is a semiconductor memory whose writable number is limited to only one time.

4. The IC card module according to claim 2 or 3, further comprising an antenna configured to receive data for operating the card control section from outside.

5. An information processing method comprising:
checking whether or not a unique identifier is stored in a memory of an IC card module when the IC card module is connected to an information processing device;
checking matching of a unique identifier stored in the memory and a unique identifier stored in the information processing device when a unique identifier is stored in the memory, permitting a use of the IC card module by the information processing device when a result of the matching is matched, and refusing a use of the IC card module by the information processing device when a result of the matching is not matched; and
writing a unique identifier stored in the storage unit in the memory and permit a use of the IC card module by the information processing device when a unique identifier is not stored in the memory.

6. A computer program for making a computer executing processing comprising:
checking whether or not a unique identifier is stored in a memory of an IC card module when the IC card module is connected to an information processing device;
checking matching of a unique identifier stored in the memory and a unique identifier stored in the information processing device when a unique identifier is stored in the memory, permitting a use of the IC card module by the information processing device when a result of the matching is matched, and refuse a use of the IC card module by the information processing device when a result of the matching is not matched; and
writing a unique identifier stored in the storage unit in the memory when a unique identifier is not stored in the memory and permitting a use of the IC card module by the information processing device.
